# EUROPEAN PATENT APPLICATION

(11) **EP 2 672 460 A2**
(43) Date of publication of application: **11.12.2013**
(21) Application number: 13170911.5
(22) Date of filing: 06.06.2013
(51) Int. Cl.: G06T 19/00

(54) **Graphical user interface for three-dimensional layout of an image gallery on a portable device**

(30) Priority: 08.06.2012 GB 201210158
(71) Applicant: Samsung Electronics Co., Ltd, Gyeonggi-do 443-742 (KR)
(72) Inventor: Bucur, Adrian, 443-742 Gyeonggi-do (KR); Moon, Jihea, 443-742 Gyeonggi-do (KR); Yu, Seockhyun, 443-742 Gyeonggi-do, (KR)
(74) Representative: Gover, Richard Paul

(57) **Abstract**

A portable device includes: a display screen; a processor; and an input device operable by a user, wherein the processor controls the display screen to display a graphical user interface comprising a plurality of images arranged in a three dimensional (3D) space in one of a depth layout and a curved layout. In the depth layout mode images are displayed arranged such that at least a first image is positioned further away in the 3D space than a second image and each image is positioned upon a two dimensional (2D) surface extending into the 3D space, transverse to the 2D surface at its respective position and facing the plane of the display screen. In the curved layout mode the images are arranged along a curved path within the 3D space forming a coil about an axis which is parallel to or forms an acute angle relative to the plane of the display screen such that at least one image is positioned facing outwards from the coil and at least one image is positioned facing inwards towards the axis such that each image faces the plane of the display screen.

## Description

The present invention relates to a mobile telephone or other similar portable apparatus having a graphical user interface (GUI).

### BACKGROUND

In is known for a portable apparatus such as a mobile telephone and other portable device to have a GUI by means of which a user can interact with the portable apparatus for selecting a desired item or image. The images may represent image files stored within, or available to the portable apparatus. In particular, the images may comprise copies of the pictures at a reduced scale such that multiple pictures can be viewed simultaneously. Alternatively, or additionally, some of the images may represent videos stored within, or available to the portable apparatus. Each image may comprise a single frame from the video, or a separate image. Further, the images may relate to other types of media, for instance audio files, or programs which may be launched by selecting the corresponding image.

For a portable apparatus equipped with a touch screen, selecting a desired image may be achieved by touching the desired image. Alternatively, for a portable apparatus with a different form of user input device, selecting a desired image may comprise entering a user input when the desired image is at a focal point upon the screen, or a focal point is shifted through user input to the desired image.

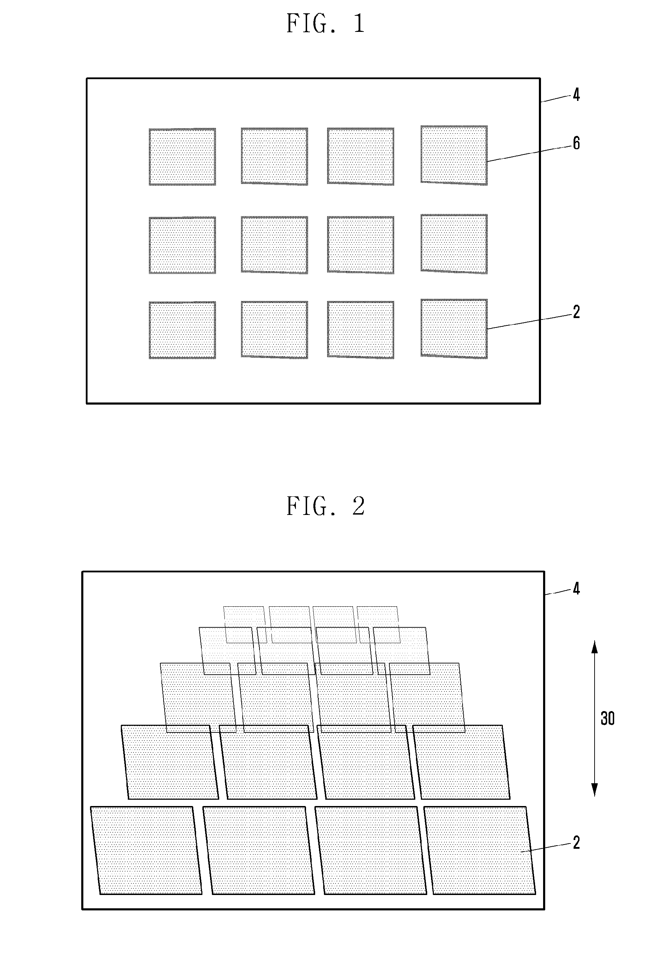

Conventionally, a gallery allows a large number of images to be browsed, though only a smaller number of images may be displayed on the screen at any one time due to limited display screen size. One common type of gallery is illustrated in Figure 1 in which a plurality of images 2 are displayed upon a portable apparatus screen 4 arranged in a grid of images, referred to herein as a grid layout mode. Figure 1 shows a grid layout mode gallery having a grid of images 2 with four columns and three rows of images 2. In order to display further images the grid layout mode may be arranged to switch to a new page having a similar grid displaying different images 2, or the grid may be scrolled. Scrolling may, for instance, be in a downwards direction. In downwards scrolling, the selection of images 2 moves downwards, and individual images move upwards. That is, the top row 6 of images 2 moves upwards off the screen 4 and a fresh row of images appears at the bottom of the screen with the remaining rows shifted upwards accordingly. When scrolling a grid layout mode gallery it may be considered that all of the available images are arranged in a master grid which extends in at least one direction beyond the edge of the screen and scrolling is equivalent to moving a display grid over the master grid of images such that only a portion of the master grid may be viewed within the display grid at any one time.

Accordingly, a gallery having a grid layout mode may not be the optimum way of presenting a large number of images to the user as each image in the grid is the same size, thus there is a limit to the number of images that can be included in the grid. Additionally, it may be difficult for the user to appreciate that the displayed images are only a subset of the available.

### BRIEF SUMMARY OF THE DISCLOSURE

In light of the above, certain embodiments of the present invention aim to provide an improved portable apparatus with a GUI, and improved GUI techniques. In particular, certain embodiments of the present invention introduce additional gallery layout modes which provide benefits in terms of facilitating rapid identification and selection of a desired image, and hence a corresponding desired digital media item or other item. In certain embodiments the layout of a gallery may be selectively changed by the user between different layout modes.

Certain embodiments of the present invention relate to a gallery which incorporates more than one layout mode and graphical transitions between different layout modes for presenting digital media items.

In certain embodiments graphical transitions, which may be animated, between different layouts modes are displayed when user input to switch between different layout modes is received. It is an aim of certain embodiments of the invention to provide a gallery which provides a more pleasing user experience through the new layout modes and animated transitions between layout modes. In particular, the new layout modes may present the images to give the appearance of a three dimensional (3D) arrangement of images. The animations forming the transitions between different layout modes may also be arranged to give the appearance of 3D movement.

According to a first aspect of the present invention there is provided a portable apparatus comprising: a display screen; a processor; and an input device operable by a user of the portable apparatus; wherein the processor is adapted to control the display screen to display a graphical user interface comprising a plurality of images arranged in a three dimensional (3D) space in a layout mode comprising one of:a depth layout mode in which the images are displayed such that at least a first image is positioned further away in the 3D space than a second image, each image being positioned upon a two dimensional (2D) surface extending into the 3D space, transverse to the 2D surface at its respective position and facing the plane of the display screen; and a curved layout mode in which the images are arranged along a curved path within the 3D space forming a coil about an axis which is parallel to or forms an acute angle relative to the plane of the display screen such that at least one image is positioned facing outwards from the coil and at least another image is positioned facing inwards towards the axis such that each image faces the plane of the display screen; wherein the input device is arranged to receive a selection input selecting at least one of the images displayed on the display screen and to supply the selection input to the processor, which upon receipt is arranged to perform a corresponding function.

At least one image may represent one of: a digital media item, for which the corresponding function performed by the processor is opening, displaying, playing or otherwise interacting within the digital media item; and a program, for which the corresponding function performed by the processor is opening or launching the program.

The processor may be adapted to control the display screen to display the images arranged in a layout mode from a group including at least one of the depth layout mode, the curved layout mode and a grid layout mode in which the images are displayed arranged in a grid having rows and columns upon a 2D surface within the 3D space.

In the grid layout mode the images may be arranged in a grid upon the 2D surface having rows and columns, the rows being arranged parallel to or forming an acute angle relative to the plane of the display screen.

In the curved layout mode the curved path may coil about its axis such that portions of each turn of the coil approach the plane of the display screen and portions of each turn of the coil pass further away from the plane of the display screen.

In the curved layout mode each image may be positioned upon a surface of a cylinder having a radius equal to the radius of the coil at the position of the image and a longitudinal axis parallel to or forming an acute angle relative to the axis of the coil.

The curved layout mode may alternatively be referred to as a spiral layout mode in which images are positioned along the path of a spiral.

The processor may be arranged to adjust the transparency of at least one image in proportion to the distance of the image from the plane of the display screen in the 3D space.

The input device may be arranged to receive a navigation input indicating a required movement of the currently displayed layout mode and to supply the navigation input to the processor which upon receipt is arranged to control the display screen to shift the currently displayed images such that at least one image is shifted to a position at which it is no longer visible within the display screen and at least one further image which was previously not visible becomes visible within the display screen.

When the grid layout mode is currently displayed the navigation input may be arranged to cause sliding motion of the images within the plane of the 2D surface. The navigation input may be arranged to cause the processor to tilt at least one image in the direction of the sliding motion.

When in the depth layout mode the navigation input may be arranged to cause sliding movement of the images such that for at least some of the images the distance from the image to the plane of the display screen in the 3D space changes.

When in the spiral layout mode the navigation input may be arranged to cause rotation of the spiral about its axis such that for at least some of the images the distance from the image to the plane of the display screen in the 3D space changes. The navigation input may be further arranged to cause translation of the spiral along its axis such that the spiral screws upwards or downwards causing images to pass sequentially through at least one fixed position relative to the display screen.

The input device may be arranged to receive a spiral translation input when in the spiral layout mode and to supply the spiral translation input to the processor which upon receipt is arranged to control the display screen to translate the spiral along its axis without rotation of the spiral such that at least one image is shifted to a position at which it is no longer visible within the display screen and at least one further image which was previously not visible becomes visible within the display screen.

The input device may be arranged to receive a zoom input indicating a required zoom operation and to supply the zoom input to the processor, which upon receipt is arranged to cause at least one currently displayed image to be enlarged or shrunk.

When in the grid layout mode or the depth layout mode the processor may be arranged to enlarge or shrink all of the currently displayed images arranged in a grid having rows and columns and to adjust the number of currently displayed rows or columns by causing images to slide to new respective positions such that at least one image is shifted to a position at which it is no longer visible within the display screen or at least one further image which was previously not visible becomes visible within the display screen.

When in the spiral layout mode the processor may be arranged to enlarge or shrink all of the currently displayed images and to enlarge or shrink the dimensions of the spiral proportionally such that part or the whole of at least one image is shifted to a position at which it is no longer visible within the display screen or part or the whole of at least one further image which was previously not visible becomes visible within the display screen.

When in the spiral layout mode the processor may be arranged to enlarge or shrink at least one image without altering the dimensions of the spiral and to either causing translation of further images along the spiral such that at least one image is shifted to a position at which it is no longer visible within the display screen or at least one further image which was previously not visible becomes visible within the display screen, or to cause at least one further image to be enlarged or shrunk proportionally to accommodate the change in size of the at least one image.

The processor may be adapted to control the display screen to display the plurality of images arranged in at least two layout modes including at least one from a group including the grid layout mode, the depth layout mode, and the spiral layout mode; and the input device may be arranged to receive a layout mode change input instructing a change to the current layout mode and to supply the layout mode change input to the processor which upon receipt is arranged to change the currently displayed layout mode to an alternative layout mode by modifying at least one of the position, size, shape and transparency of displayed images and to animate the change the display of at least some of the images in the current layout mode and at least some of the images in the alternative layout mode.

If the current layout mode is the grid layout mode and the alternative layout mode is the depth layout mode, the processor may be arranged to: cause rotation of a currently displayed grid of images having rows and columns about a curved surface such that the images move further from the plane of the display screen and become increasingly transparent until disappearing; and cause rows of images in the depth layout mode to appear within the display screen and to expand and translate to their final positions within the depth layout mode.

If the current layout mode is the depth layout mode and the alternative layout mode is the spiral layout mode, the processor may be arranged to: cause each image in turn displayed in the depth layout mode to slide and change form to adopt a new position and form within a spiral. In the depth layout mode the images may be arranged in rows and the images may be caused to slide to their new positions within the spiral such that the images are ordered within the spiral according to the positions of the images within a grid in the depth layout mode, positions within the spiral being allocated to images in the grid starting from a first end of a first row and then each image in the row in order until the row is complete, continuing with each row in turn.

The current layout mode may be the spiral layout mode and the alternative layout mode may be the grid layout mode, and wherein the processor may be arranged to: cause images positioned within each turn of the spiral furthest from the plane of the display screen in the 3D space to become increasingly transparent until they disappear; cause remaining portions of each turn of the spiral to rotate about the longitudinal axis of the spiral such that images move further from the plane of the display screen and become increasingly transparent until they disappear; and cause rotation of a grid of images having rows and columns about a curved surface such that the images move towards the plane of the display screen, the images initially being transparent and becoming increasingly opaque until upon reaching the closest point of the curved surface the images continue to slide relative to the plane of the display screen to form a grid of images having rows and columns.

The grid layout mode may display images arranged in a grid having rows and columns and includes at least one container image representative of a group of images.

The input device may be arranged to receive a container unpack input identifying a container image representative of a group of images to be displayed and to supply the container unpack input to the processor which upon receipt may be arranged to: cause other currently displayed images to becoming increasingly transparent until they disappear; and cause at least some images within the group of images to slide to separate positions within the grid of images.

If the current layout mode is the spiral layout mode and the alternative layout mode is the grid layout mode, the processor may be arranged to: cause each image in turn displayed in the spiral layout mode to slide and change form to adopt a new position and form within a grid; wherein the grid layout mode displays images arranged in a grid having rows and columns and includes at least one container image representative of a group of images, such that at least one group of images within the spiral are caused to slide and change form to adopt the same position within the grid indicated by a container image.

According to a second aspect of the present invention there is provided a graphical user interface comprising a plurality of images arranged in a three dimensional (3D) space in a layout mode comprising one of: a depth layout mode in which the images are displayed such that at least a first image is positioned further away in the 3D space than a second image, each image being positioned upon a two dimensional (2D) surface extending into the 3D space, transverse to the 2D surface at its respective position and facing the plane of the display screen; or a curved layout mode in which the images are arranged along a curved path within the 3D space forming a coil about an axis which is parallel to or forms an acute angle relative to the plane of the display screen such that at least one image is positioned facing outwards from the coil and at least one image is positioned facing inwards towards the axis such that each image faces the plane of the display screen; wherein the graphical user interface is arranged to receive a user input selecting a first image displayed upon the display screen, and in response to perform a function corresponding to the selected first image.

According to a third aspect of the present invention there is provided a method of operating a portable apparatus comprising a display screen, a processor and an input device operable by a user of the portable apparatus, the method comprising: operating the processing means to control the display a graphical user interface comprising a plurality of images arranged in a three dimensional (3D) space in a layout mode comprising one of: a depth layout mode in which the images are displayed such that at least a first image is positioned further away in the 3D space than a second image, each image being positioned upon a two dimensional (2D) surface extending into the 3D space, transverse to the 2D surface at its respective position and facing the plane of the display screen; and a curved layout mode in which the images are arranged along a curved path within the 3D space forming a coil having an axis which is parallel to or forms an acute angle relative to the plane of the display screen such that at least one image is positioned facing outwards from the coil and at least one image is positioned facing inwards towards the axis such that each image faces the plane of the display screen; receiving user input via the input device selecting a first image displayed on the display screen; and operating the input means to perform a function corresponding to the selected first image.

According to a fourth aspect of the present invention there is provided a computer readable medium storing computer program code arranged to cause a portable device to implement the above method.

Another aspect of the invention provides a computer program comprising instructions arranged, when executed, to implement a method and/or apparatus in accordance with any one of the above-described aspects. A further aspect provides machine-readable storage storing such a program

### BRIEF DESCRIPTION OF THE DRAWINGS

Embodiments of the invention are further described hereinafter with reference to the accompanying drawings, in which:
Figure 1 illustrates a grid layout mode for a gallery GUI forming part of the prior art and forming part of an embodiment of the present invention comprising a gallery GUI having multiple layout modes;
Figure 2 illustrates a depth layout mode for a gallery GUI forming part of an embodiment of the present invention comprising a gallery GUI having multiple layout modes;
Figure 3 illustrates a spiral layout mode for a gallery GUI forming part of an embodiment of the present invention comprising a gallery GUI having multiple layout modes;
Figure 4 illustrates an aspect of a grid layout mode according to an embodiment of the present invention;
Figure 5 illustrates a zoom operation applied to a grid layout mode according to an embodiment of the present invention;
Figure 6 illustrates a zoom operation applied to a depth layout mode according to an embodiment of the present invention;
Figures 7a and 7b illustrate a zoom operation applied to a spiral layout mode according to an embodiment of the present invention;
Figures 8a and 8b illustrate a first step of a transition from a grid layout mode to a depth layout mode according to an embodiment of the present invention;
Figure 8c further illustrates details of the first step of a transition from a grid layout mode to a depth layout mode according to an embodiment of the present invention;
Figure 9 is a flow chart for a process of implementing the first step of a transition from a grid layout mode to a depth layout mode according to an embodiment of the present invention;
Figures 10a and 10b illustrate a second step of a transition from a grid layout mode to a depth layout mode according to an embodiment of the present invention;
Figure 11 illustrates a transition from a depth layout mode to a spiral layout mode according to an embodiment of the present invention;
Figure 12 is a flow chart for a process of implementing a transition from a depth layout mode to a spiral layout mode according to an embodiment of the present invention;
Figures 13a, 13b, 13c, 13d and 13e illustrate a transition from a spiral layout mode to a grid layout mode according to an embodiment of the present invention;
Figure 13f further illustrates details of a transition from a spiral layout mode to a grid layout mode according to an embodiment of the present invention;
Figure 14 is a flow chart for a process of implementing a transition from a spiral layout mode to a grid layout mode according to an embodiment of the present invention;
Figures 15a and 15b illustrate a zoom operation applied to a spiral layout mode according to an alternative embodiment of the present invention;
Figure 16 illustrates a process of rapidly navigating through a large number of images within a spiral layout mode according to an embodiment of the present invention;
Figures 17a, 17b and 17c illustrate a transition from a spiral layout mode to a grid layout mode incorporating containers representing multiple images according to an embodiment of the present invention;
Figures 18a, 18b and18c illustrate a transition from a grid layout mode incorporating at least one container representing multiple images to a grid layout mode incorporating single images according to an embodiment of the present invention; and
Figure 19 illustrates a portable apparatus in accordance with an embodiment of the present invention.

### DETAILED DESCRIPTION

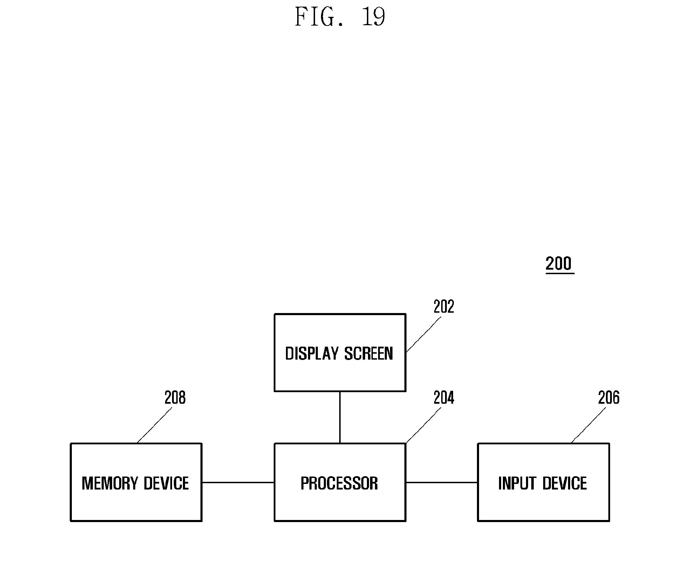

Embodiments of the present invention will now be described which relate to a GUI for a portable apparatus 200, as illustrated in Figure 19, such as a mobile telephone, or other similar form of portable device. The portable apparatus 200 includes a display screen202, a processor 204 arranged to display a GUI on the screen 202 incorporating a plurality of images stored within a memory device 208 within the portable apparatus 200, and a user input device 206. Particular embodiments of the invention may be implemented on a portable apparatus 200 which incorporates a touch screen combining the display screen 202 and the input device 206 within a single component thusallowing a user to interact intuitively with the GUI, but the present invention is not limited to this. In particular, the present invention is intended to cover conventional display screens 202 without a touch input and supplied in connection with an alternative input mechanism 206including, but not limited to, one or more buttons, sliders, joysticks or similar physical devices, an audible input mechanism through a microphone and a gestural input mechanism captured through a camera or video camera. Oneskilled person in the art will appreciatethat the portable apparatus 200 may incorporate further components known form such devices, including communication circuits for communicating with a network or other devices, and further input and output devices such as a speaker or microphone. The present invention is also applicable both for conventional 2D display screens and for portable devices equipped with 3D display screens. Discussion of user input mechanisms, gestures and similar details within the patent specification should not be considered to be in any way limiting on portable devices where the claimed graphical user interface and techniques may be applied. When in the following description reference is made, for instance, to a user selecting an image within a gallery this is intended to cover a touch screen embodiment in which the user directly touches the desired image to select the image. This is further intended to cover an embodiment in which the user enters some other form of input to select an image, for instance by pressing a button to select an image which is at the current focal point of the screen (for instance in the centre). The images displayed in a gallery forming part of a portable apparatus GUI may represent pictures, videos or any other suitable digital media item, or a program which can be launched or any other item.

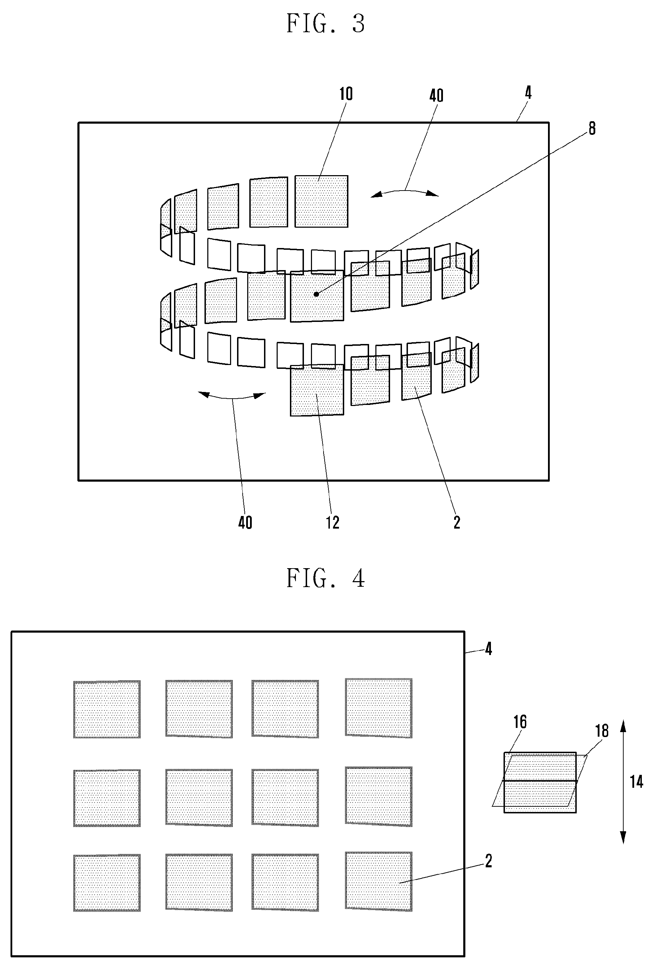

In accordance with certain embodiments of the invention, there is provided a gallery which has more than one type of layout mode, and which allows a user to switch between different layout modes. In particular embodiments to be described and illustrated there are three different gallery layout modes: a grid layout mode, which in certain embodiments is generally similar to the conventional grid layout mode described above in connection with Figure 1; a depth layout mode illustrated in Figure 2; and a curved layout mode (which may in certain embodiments be referred to as a spiral layout mode) illustrated in Figure 3. In each layout mode a plurality of images are arranged in a three dimensional (3D) space, which may optionally include images displayed upon a two dimensional (2D) surface within the 3D space.

In the grid layout mode images are displayed upon a two dimensional (2D) surface within the 3D space. In particular embodiments the grid layout mode displays images arranged in a grid having rows and columns upon a plane or curved 2D surface facing the plane of the display screen within the 3D space. It will be appreciated that there is considerable variation in the shape of the 2D surface and how images are arranged on that surface.

In the depth layout mode images are displayed such that at least a first image is positioned further away in the 3D space than a second image. In particular embodiments, the depth layout modes displays images such that each image is positioned upon a 2D surface extending from the plane of the display screen into the 3D space, each image being arranged transverse to the 2D surface at its respective position and facing the plane of the display screen. The images may be arranged in a grid upon the 2D surface having rows and columns, the rows being arranged parallel to or forming an acute angle relative to the plane of the display screen. It will be appreciated that there is considerable variation in the shape and position of the 2D surface on which the images are positioned, the arrangement of images on that surface, and how the images and the surface interconnect. In certain embodiments of the invention the images may not all be aligned with a single surface. Each image may comprise a 2D object facing the display screen or the image may be rendered on a 3D object within the 3D space.

Referring now to Figure 2, this illustrates one particular embodiment of a depth layout mode in which a plurality of images 2 (only one of which is identified) is displayed upon a portable apparatus screen 4 to give the appearance of depth. Specifically, the images are rendered in a 3D space and each image has a position within the screen represented by X, Y and Z Cartesian coordinates, with the X:Y plane being parallel to the display screen and the Z axis extending into the screen such that an image within a smaller Z value appears larger. Specifically, the arrangement of images is such as to give the appearance of a 3D perspective grid that is navigable in which images appear as upright 3D objects, through scaling and skewing the images according to their position within the grid. As the display grid (the visible subset of the available images) moves downwards, the rows of images move vertically upwards. Images towards the top of the screen are faded and are reduced in size to give the appearance of the images retreating into the distance. Conversely, as the display grid moves upwards, the rows of images move vertically downwards, become increasingly opaque and grow to fill a greater proportion of the screen, which is intended to give the appearance of the rows of images moving towards the user (or alternatively, the user "flying" over the rows of images).

In the curved (spiral) layout mode the images are arranged along the a curved path forming a coil within the 3D space having an axis parallel to or forming an acute angle relative to the plane of the display screen. In particular embodiments the coil may comprise a spiral or helix, though the use of these terms implies no limitation regarding whether the radius of the coil varies (continuously or intermittently) or is constant. Additionally, the use of the term spiral should not be understood to mean that the coil spirals towards or away from the axis or an origin. Additionally the pitch of the coil may be constant or may vary in any way. It will be appreciated that the type of coil may vary and the position and orientation of the coil relative to the display screen may vary. The curved layout mode may display images arranged along the path of a coil having an axis which is parallel to or forms an acute angle relative to the plane of the display screen, such that portions of each turn of the coil approach the plane of the display screen and portions of each turn of the coil pass further away from the plane of the display screen. How each image is positioned on the coil may vary significantly. For instance, each image may be positioned upon the spiral facing either outwards from the spiral or inwards towards the centre of the spiral. Each image may be curved about a surface of a cylinder having a radius equal to the radius of the spiral at the position of the image and a longitudinal axis parallel to or forming an acute angle relative to the axis of the spiral. The spiral layout mode may alternatively be considered to be a cylinder layout mode in which images are rendered on the surface of a cylinder with each image rendered at a position upon the curved surface of a cylinder (or a cone or a tubular shape having a variable radius, in other embodiments) defined by a coil, spiral or helix extending across the curved surface of the cylinder (or cone). Each image may be rendered such that a fixed point (for instance the centre) of the image is positioned on the spiral and the images are spaced apart along the spiral or adjacent to one another. Each image may be curved to match the curved surface of the cylinder or each image may be rendered as a flat image in a plane forming a tangent to the curved surface at a point along the spiral.

Referring now to Figure 3, this illustrates one particular embodiment of a curved layout mode, to be referred to hereinafter as a spiral layout mode, in which a plurality of images 2 (only one of which is identified) are displayed upon a portable apparatus screen 4 arranged such as to give the appearance of the images being formed into a 3D spiral or helix. Particular embodiments of the present invention strictly provide a gallery layout mode in which the images are arranged to give the appearance of being formed as a 3D helix (the images appear to be arranged at a constant distance from a central axis). However, it will be appreciated that a spiral may instead be used, in which the images appear to vary in distance from a central axis. There terms "coil" and "spiral" used herein and within the claims are intended to cover both a spiral and a helix. The spiral of images is navigable through user input which gives the appearance of the spiral of images rotating, for instance so that images pass sequentially through a centre point 8, so that the spiral of images moves upwards or downwards. Images are arranged one after the other following the spiral revolutions. As images move away from the centre point they are arranged to give the appearance of retreating into the distance as they pass about the back of the spiral, and so are faded, reduced in size and are changed in shape to give the appearance of rotation. The change in shape may comprise skewing and compressing the images about one or more axis. The change in shape may alternatively, or additionally, comprises fitting the images to a curved surface. It will be appreciated that movement of the spiral causes certain images to move towards the front of the spiral (either to the centre point 8 or to adjacent turns of the spiral 10, 12). As images move towards the front of the spiral they become increasingly opaque, increase in size and change in shape to give the appearance of rotation. It will be appreciated at as images move round to the back of the spiral, after a rotation of 90° further rotation of the images is arranged to give the appearance of each image being formed as thin sheet the reverse side of which is visible. In one embodiment, each image is rendered along the spiral facing outwards when upon the nearest part of a spiral turn to the plane of the display screen and facing inwards otherwise such that the images are always presented facing the user. Each image may be formed as a curved sheet in a 3D space having zero thickness. In alternative embodiments, the reverse surface of each image may be blank or have a default image, may have the same image as the front surface, or may be a mirror image of the front surface to give the appearance of each image being formed as a translucent film.

In certain embodiments of the invention, a user can switch the current gallery layout view. Certain particular transitions from one layout view to another will be described. While the present invention describes a graphical user interface for a portable apparatus having three specified layout modes and three specified transitions between those layout modes in a fixed order, the present invention is not limited to this. In particular, only one of the three layout modes may be provided, optionally with other unspecified layout modes. Transitions may be from the currently displayed layout mode to any other layout mode, for instance by allowing user input specifying a required layout mode. In one particular embodiment, the layout modes are selected sequentially in a fixed order through a closed loop of layout modes. The user may be able to supply a layout mode change input indicating a transition to the next mode,for instance by selecting a particular icon displayed upon the display screen. The transitions may be animated to give the appearance of 3D movement of the images from one layout to another when a user input signals a required transition. Similarly, navigation within each gallery layout mode may be animated. The appearance of 3D movement may be achieved by adjusting at least one property of each image, for instance position, size, rotation, skew, shape and transparency (alpha value for an image alpha channel for alpha compositing, referred to herein as adjusting image alpha). Navigation and zooming within each gallery layout mode will now be described.

Referring to Figure 4, navigation within a gallery grid layout mode will now be further described. In a grid layout mode a plurality of images which is larger than the number of images that can be presented on a display screen 4 at a single time, may be viewed by panning a display grid (the currently displayed subset of images). For instance, panning may be vertically upwards and downwards, that is panning parallel to a Y axis illustrated by the double ended arrow 14 for a screen in a normal orientation in which the screen lies in an X:Y plane and the Z axis extends in to the screen. A panning operation may, for a portable apparatus incorporating a touch screen, be performed in response to receiving a user input comprising a swiping operation generally parallel to a direction in which the grid can be panned. As the user navigates through the available images, rows of images disappear at either the top or the bottom of the screen, and fresh rows appear at the other of the top or bottom of the screen. It will be appreciated that panning could just as readily be parallel to the X axis. Indeed in certain embodiments of the invention, in a grid layout mode, the display grid may be panned in any arbitrary direction, for instance diagonally such that images may appear along the top edge and the right hand edge and disappear at the bottom edge and left hand edge of the screen simultaneously.

In certain embodiments of the invention, in place of the grid layout mode giving the appearance of images being arranged on a flat two dimensional (2D) surface, the images may be adjusted through a tilt effect to give the appearance of the images tilting in a 3D space in the moving direction. The tilt effect is illustrated in Figure 4 by a single image 2 shown separately firstly on a flat surface 16 and second tilted 18. It will be appreciated that the tilt effect comprises skewing the image. The images may be tilted within the grid layout view either altogether or separately to give the appearance of the images being formed on a 3D curved surface which is generally flat towards the centre of the screen 4 and curved towards at least one edge of the screen, and in particular along edges where images appear or disappear.

A process of zooming within the grid layout mode will now be described. Zooming is an operation applied to the grid layout mode when the user provides an input instructing an increase or decrease in the number of images per row (and optionally column) in the grid. The user input may, for instance, be a touch, swipe or drag upon a touch screen. The user input may be determined to relate to the displayed layout mode, for instance by being performed over the displayed images. The position of the user input relative to the displayed images on a touch screen may determine which part of the currently displayed images (if any) continue to be visible after the zoom operation.

For zooming out, the number of images on each row will increase and for zooming in the number of images on each row will decrease. A change in the number of images on each row is achieved by processing each row to adjust the size of each image, and moving images from one row to another row to accommodate the new number of images. When images are being removed from or added to a row, existing images slide into their new position and their size changed to accommodate the row size. In certain embodiments of the invention the sliding, rearrangement and resizing of images may be animated to give the appearance of continuous movement. It will be appreciated that in the event of zooming in, some of the images previously displayed will be displaced from the screen. For instance, for a grid layout mode which pans vertically, images at the right hand end of the bottom row may be displaced from the screen when zooming in. In certain embodiments the displacement of images may be arranged to ensure that the image or group of images previously centrally arranged within the grid layout remain central (or some other part of the grid remains generally fixed). It will be appreciated that the processing of zooming out similarly requires that additional images (if additional images are available) are added to the display grid.

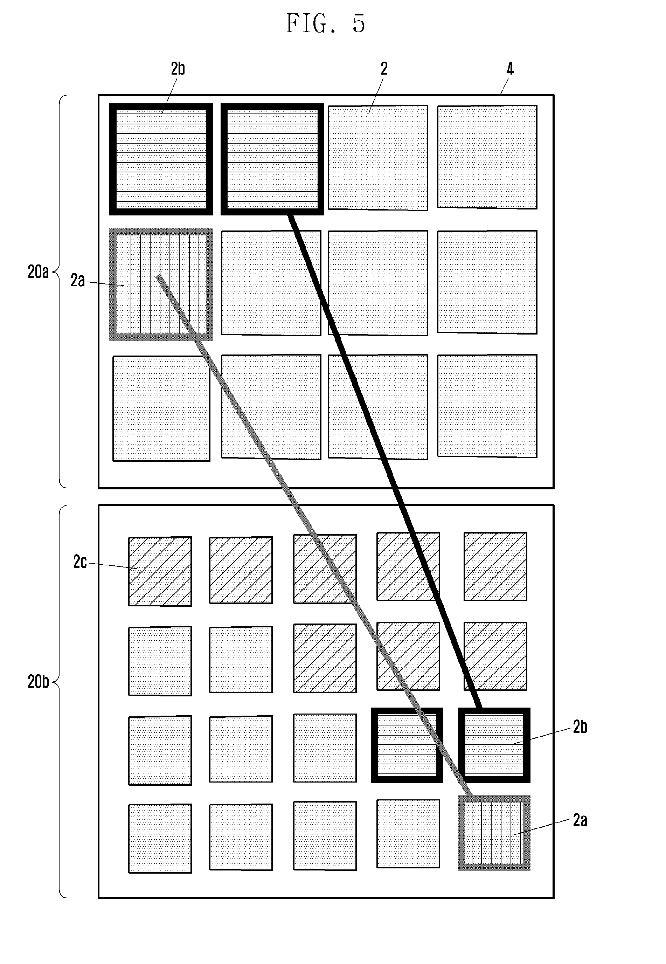

Figure 5 illustrates a zooming out operation from a first grid layout 20a having three rows and four columns to a second grid layout 20b having four rows and five columns. It will be appreciated that each image 2 is proportionally smaller in the second grid layout 20b and the screen 4 (which may be the whole or a portion of the physical display screen) remains the same size. Zooming out is performed keeping the bottom left image 2 the same in each layout. Consequently a first image 2a (identified with vertical stripes) must move from the left hand end of the middle row to the right hand end of the bottom row. Similarly, to fill the available space, second images 2b (identified with horizontal stripes) must move from the left hand end of the top row to the right hand end of the middle row. In the second grid layout 20b, a new row of third images 2c and additional images 2c in the new second from top row (identified with diagonal stripes) becomes visible. It will be appreciated that a zooming in operation represents the opposite of zooming out in terms of rearrangement and resizing of images. The rearranged images may move to their new positions either at the same time as resizing or separately and either all at the same time or sequentially.

When a user has navigated through the plurality of images in the grid layout mode, optionally zooming in or out as required, and identified a desired image, the user may select the image. As noted above, when the portable apparatus is equipped with a touch screen, selecting the image may simply comprise touching the required image. Upon selecting a desired image the image may be rapidly enlarged to display the corresponding image file (if the image is representative of an image file) or a video playback application may be opened, or other appropriate operation may be performed. The processes performed upon selecting a desired image may be generally the same in each of the gallery layout modes, and may be generally conventional, and so will not be further described.

Referring back to Figure 2, navigation within a gallery depth layout mode will now be further described. As discussed above, in a depth layout mode a plurality of images which is larger than the number of images that can be presented on a display screen 4 at a single time, may be viewed by panning a through the plurality of images while displaying only a subset of images at any one time. The images are processed to give the appearance of 3D objects arranged on a 3D plane, specifically with the images arranged in upright rows upon the plane. Browsing through the images is achieved by panning vertically upwards and downwards, that is panning parallel to a Y axis illustrated by the double ended arrow 30 in Figure 2 for a screen in a normal orientation in which the screen lies in an X:Y plane and the Z axis extends in to the screen. As the user navigates through the available images, rows of images disappear at either the top or the bottom of the screen, and fresh rows appear at the other of the top or bottom of the screen. Navigation, or panning, through the depth layout mode may be generally the same as for the grid layout mode. Specifically, for a portable apparatus incorporating a touch screen, a user may instruct a panning operation by touching the screen and dragging the touch point generally parallel to a panning operation. Towards the top of the screen the images are reduced in size, increasingly transparent (reduced alpha) and increasingly skewed to give the appearance of perspective as if the images were positioned further away. Figure 2 further shows that every image is slightly skewed to give the appearance of the images being viewed at a slight angle relative to the plane of the display screen.

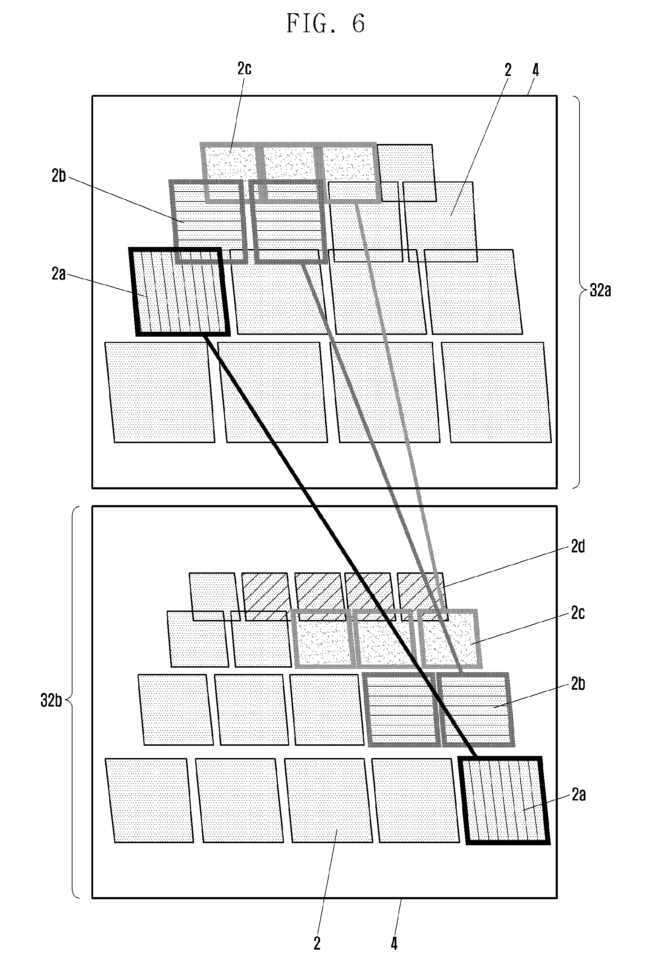

Referring now to Figure 6, a process of zooming within the depth layout mode will now be described. As for the grid layout mode, zooming is an operation applied to the images when the user provides an input instructing an increase or decrease in the number of images per row within the 3D grid. A similar user input to that described above for the grid layout mode may be used (and also for the spiral layout mode).Thus for zooming out, the number of images on each row will increase and for zooming in the number of images on each row will decrease. A change in the number of images on each row is achieved by processing each row to adjust the size of each image, and moving images from one row to another row to accommodate the new number of images. When images are removed from or added to a row, existing images slide into their new position and their size changed to accommodate the row size. In certain embodiments of the invention the sliding, rearrangement and resizing of images may be animated to give the appearance of continuous movement. It will be appreciated that in the event of zooming in, some of the images previously displayed will be displaced from the screen as for the grid layout mode. As for the grid layout mode, the displacement of images may be arranged to ensure that at least one image remains generally fixed in position, particularly for images which are more prominent. It will be appreciated that the processing of zooming out similarly requires that additional images (if additional images are available) are added to the displayed images.

Figure 6 illustrates a zooming out operation from a first depth layout 32a having four columns to a second depth layout 32b having five columns. It will be appreciated that each image 2 is proportionally smaller in the second depth layout 32b and the screen 4 (which may be the whole or a portion of the physical display screen) remains the same size. Zooming out is performed keeping the bottom left image 2 the same in each layout. Consequently a first image 2a (identified with vertical stripes) must move from the left hand end of the second from bottom row to the right hand end of the bottom row. Similarly, to fill the available space, second images 2b (identified with horizontal stripes) must move from the left hand end of the next row up to the right hand end of the second from bottom row. Third images 2c (identified by dots) move from the next row up again to fill the space created. In the second grid layout 32b additional images 2d in the new top row (identified with diagonal stripes) becomes visible.

Referring back to Figure 3, navigation within a gallery spiral layout mode will now be further described. As discussed above, in a spiral layout mode a plurality of images may be viewed by panning through the plurality of images and displaying only a subset of images at any one time. The images are processed to give the appearance of 3D objects arranged in a spiral. Browsing through the images is achieved by processing the images to give the appearance of the spiral rotating such that images pass through the centre point 8 and the spiral moves up and down with the ends of the spiral moving as indicated by curved arrows 40. Alternatively, the position of the whole spiral may remain generally fixed and the images closest to the front may appear to move up and down relative to the display screen. Navigating through the images may cause the spiral to spin up and down rotating about its longitudinal axis. The user may indicate that the spiral should rotate and thereby screw upwards or downwards in a similar way to the panning input described above: by touching the screen and dragging the touch point generally parallel to a turn of the spiral. As the user navigates through the available images, if an end of the spiral extends beyond the edge of the screen, images appear at either the top or the bottom of the screen, and images disappear at the other of the top or bottom of the screen. Towards the back of the spiral the images are reduced in size, increasingly transparent (reduced alpha) and increasingly skewed, and changed in shape to give the appearance of the images being positioned further away.

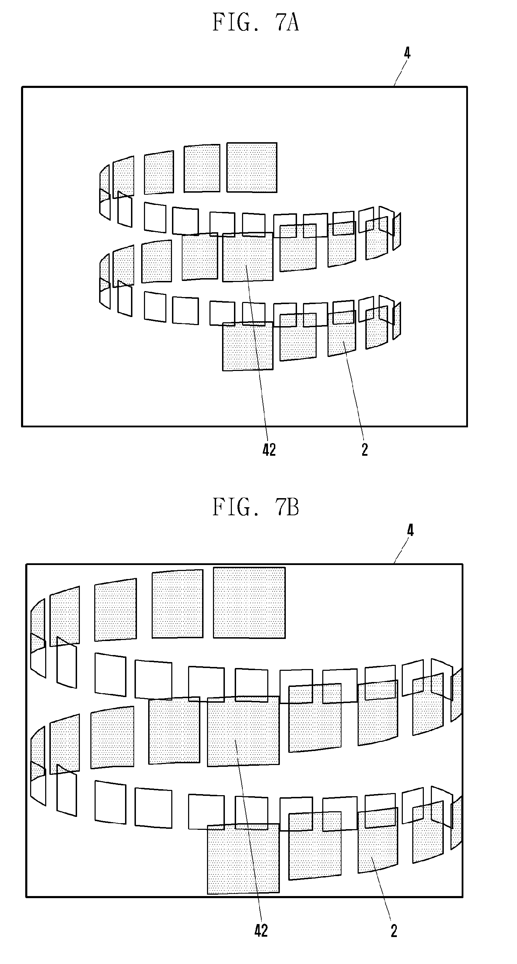

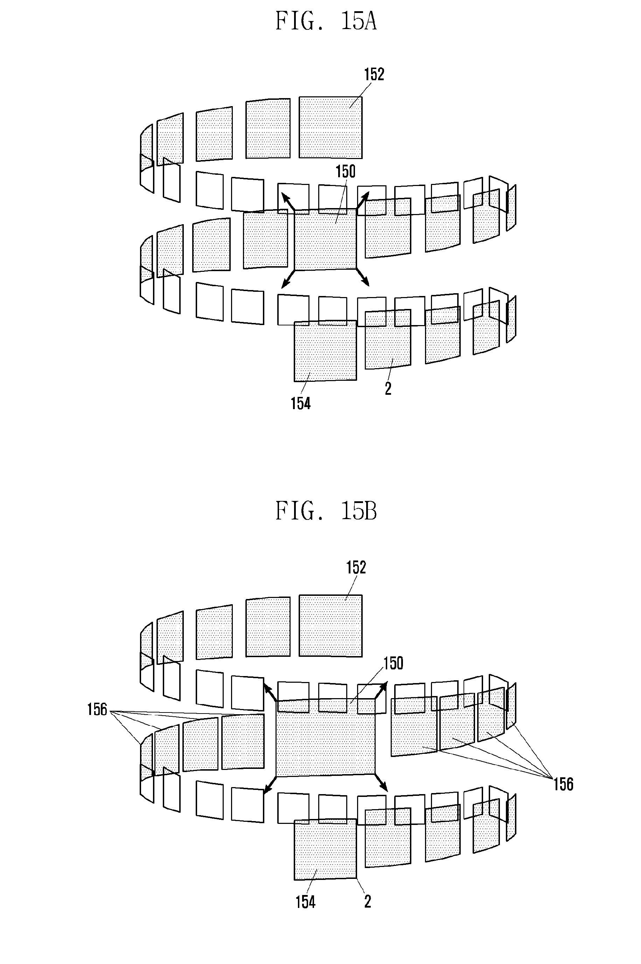

Referring now to Figures 7a and 7b, a process of zooming within the spiral layout mode will now be described. Zooming causes the size of each image to increase or decrease, which increases or decreases the apparent diameter of the spiral to vary. Figure 7b is a zoomed in version of Figure 7a, and it can be seen that the size of the spiral has increased (as though it were closer to the user) to such an extent that the sides of the spiral begin to be clipped by the edge of the screen. It can be seen that a single image 42 remains centremost in the screen. In alternative embodiments of the present invention as the spiral layout is zoomed in or out the size of the images may be changed while the apparent diameter of the spiral remains constant such that the whole width of the spiral remains visible upon zooming in. This may be achieved by causing the images to be displaced along the spiral to accommodate the increased size of the images and / or to maintain constant or proportionally constant sized gaps between adjacent images. A further zooming function for a spiral layout mode is described below in connection with Figures 15a and 15b.

As noted above, certain embodiments of the invention provide a gallery GUI having three separate layout modes: grid, depth and spiral. In response to a user input instructing a change between layout modes a transition is performed whereby items from a certain layout are rearranged in another layout by changing their properties such as position, rotation, size, shape, depth, alpha, etc. and animating their transformation. The user input may comprise a user input touching (for a touch screen) or otherwise selecting an icon displayed alongside the current gallery layout mode. In certain embodiments of the invention, the three available layout modes are arranged in order and a user is only able to transition from one layout mode to the next (and not transition in the opposite direction). Specifically, when in the grid layout mode an user input instructing a change to the layout triggers a transition from grid layout mode to depth layout mode. The other two particular transitions to be described in the present patent specification are depth layout mode to spiral layout mode and spiral layout mode to grid layout mode. Each available transition will now be described.

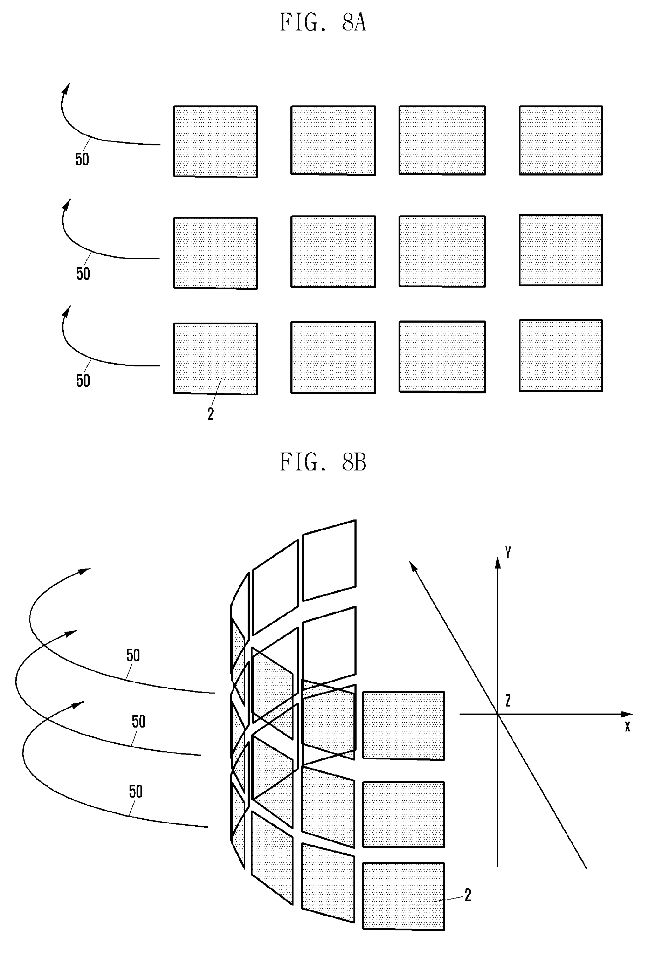

A transition from a grid layout mode to a depth layout mode will now be described in connection with Figures 8a -10b. The transition begins with a subset of images displayed in the grid layout mode as illustrated in Figure 1. Transitioning the images to the depth layout mode involves two steps. In the first step the whole grid is processed to give the appearance of the grid being rotated about the surface of a cylinder and the images faded (by decreasing the alpha values for the images) until at the apparent furthest point of the rotation the images completely disappear. In the second step, images in the depth layout mode fade in (increasing alpha from zero) and rows appear first small and centrally positioned within the screen and then move all directions to fill the screen. The images displayed may or may not be the same in the two steps.

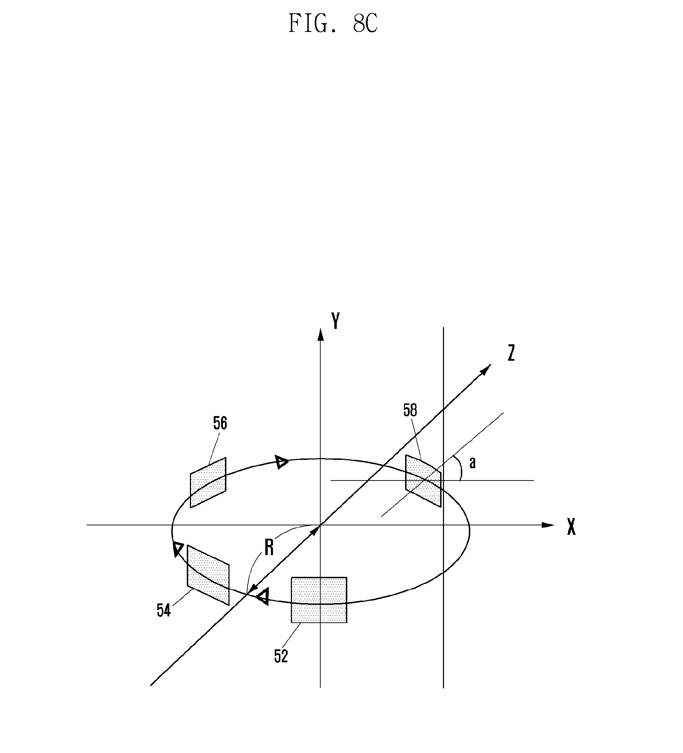

In the first step as shown in Figures 8a and 8b, the items in the grid begin a revolve effect, clockwise, around the Y axis. The images 2 first slide towards the left parallel to the X axis and then follow a curved path indicated by curved arrows 50.The revolve effect takesthe images farther in the distance along the Z axis, making them and the images fade away, gradually, from being fully opaque to being invisible. The point of invisibility may be the furthest point of the rotation from the initial position. It will be appreciated that the sliding and rotation may be in the opposite directions, and the rate of fade and the point at which the images disappear may vary. Figure 8b shows the first step partially completed with the column of images originally leftmost rotated almost completely to the back of the cylinder. Referring to Figure 8c this schematically shows the rotation for a single image 2 from its initial position 52 at which it is fully opaque, revolving about the Y axis through illustrated positions 54, 56 and 58. An invisibility angle "a" is identified in the X:Z plane about the Y axis and the radius of the revolution is indicated by R. The change in alpha may be a function of the angle a. An invisibility toggle value A may be defined. The invisibility toggle value A comprises an angular position within the X:Z plane about the Y axis at which point an image becomes invisible, or a new image appears and begins to be partially visible. The toggle value A may be aligned with the Z axis, which extends into the 3D space away from the display screen, such that images become invisible or appear at the furthest point of the images sliding path. If the displayed image switches between different layout modes then the invisibility toggle value A may be point at which the images are switched.

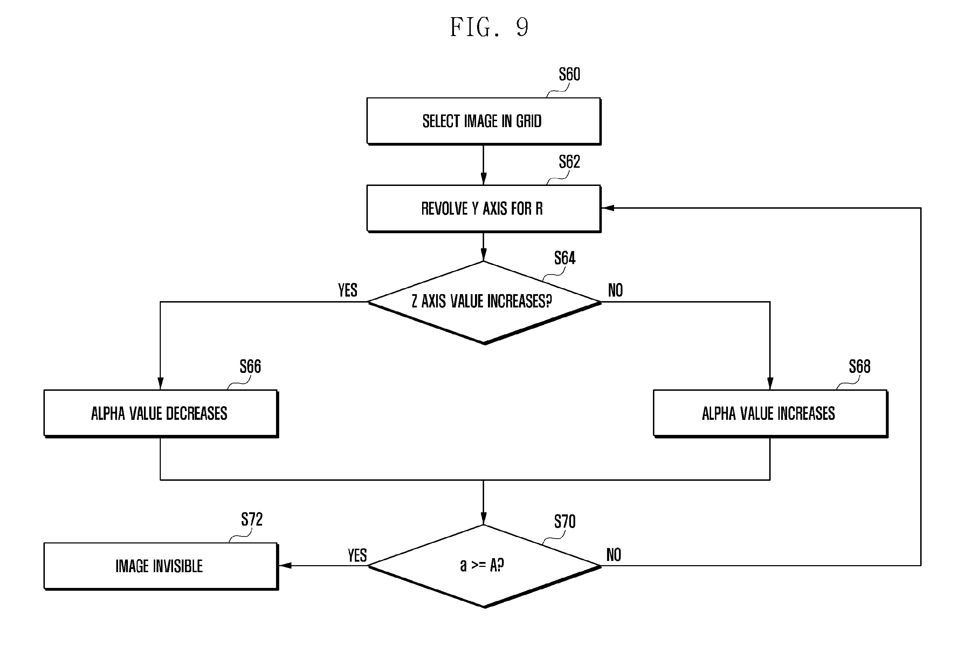

Figure 9 is a flow chart indicating how the alpha value is derived for each image in the grid. At step S60, a first image in the grid is selected (the flowchart of Figure 9 is recursive for each image). At step S62, the rotation for that image begins about the Y axis at radius R. At step S64, the Z position value of the image is determined, which allows the determination of angle a. It may be that the X position must also be determined. If the Z value has increased this indicates that the image has moved further away from the display screen and so at step S66 the image alpha value is decreased. Alternatively, if the Z value has increased this indicates that the image has moved closer to the display screen and so at step S68 the image alpha value is increased. At step S70, a check is made whether the angle a is greater than or equal to the toggle value A, and if so then, at step S72, the image is set to be invisible. In further steps (not illustrated in Figure 9) a new image or the same image may reappear. Additionally it will be understood that the process of Figure 9 is performed repeatedly until the rotation of an image is complete.

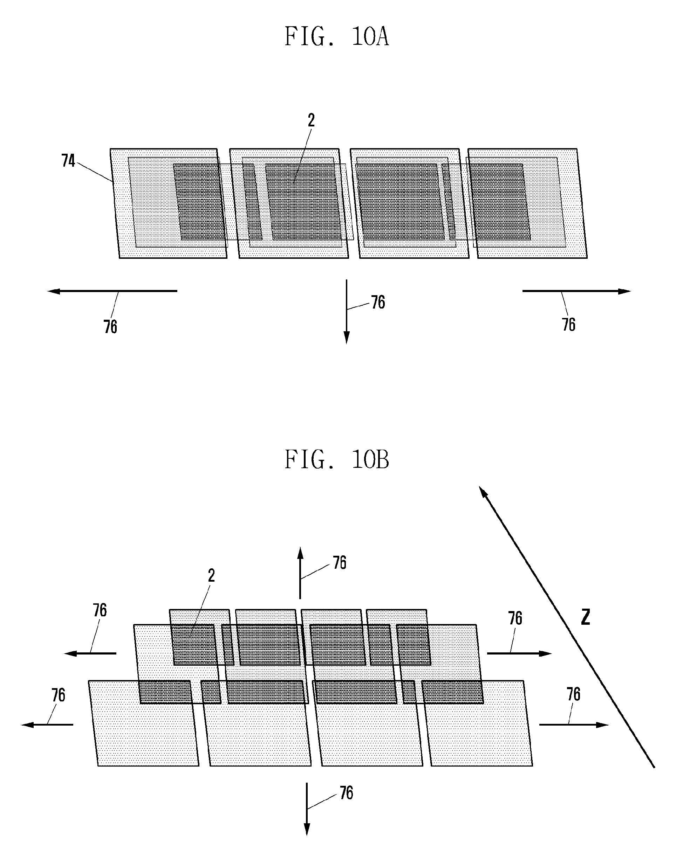

In the second step of the transition illustrated in Figures 10a and 10b images in the depth layout mode begin to appear. The rows initially appear centrally within the screen and expand in every direction as indicated by arrows 76. Optionally the rows may initially appear to be very small within the screen and expand outwards before the various rows separate and move upwards or downwards. Rows of images appear fading in from zero alpha. The depth layout rows initially appear stacked behind each other, the first (front) row 74 visible along the Z axis becoming the largest row and the last row along the Z axis becoming the smallest row. Optionally the rows may initially appear to be very small within the screen and expand outwards before the various rows separate and move upwards or downwards. The first visible row begins to slide down towards the bottom of the view. At the same time, items in this row will scale gradually as the animation takes place, expanding. While the first visible row begins sliding down, the row behind it will perform the same animation, keeping its position and size relative to the first one. Half the rows that are closest on the Z axis animate downwards while the other half will animate upwards. All the rows will perform the animation until all the rows that fit the view are visible.

Alternatively, a first row may appear at the top of the screen and rows of images begin to move downwards and outwards and further rows appear at the top of the screen. Expansion of the depth layout mode continues until the screen is filled. It will be appreciated that the effect could alternatively be considered to be a 3D plane supporting rows of images which stops at a certain point and the view point of the user travels over the plane in the Z direction from a position in which the rows of images are vanishingly small such that the rows of images grow in size as the viewpoint of the user draws closer.

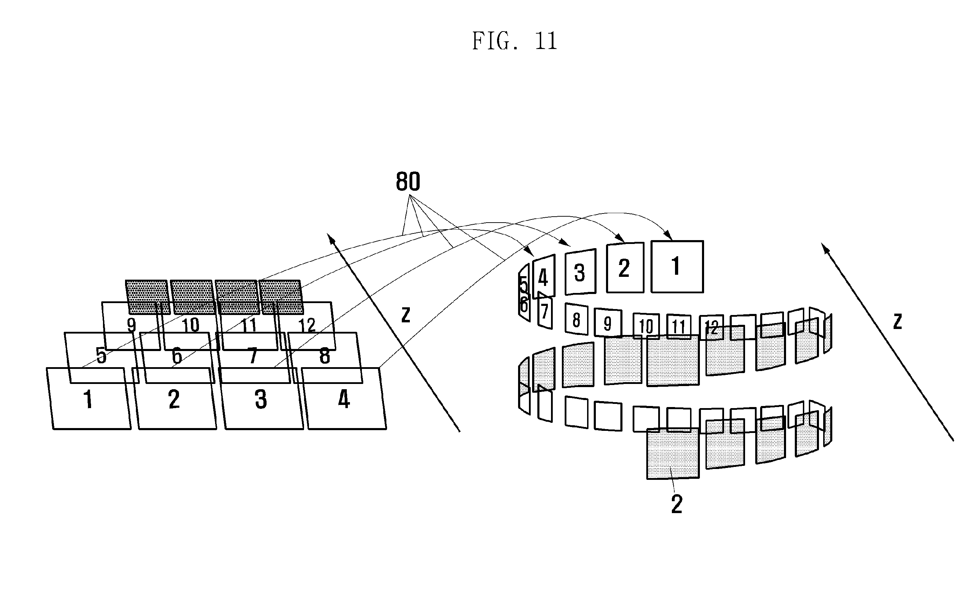

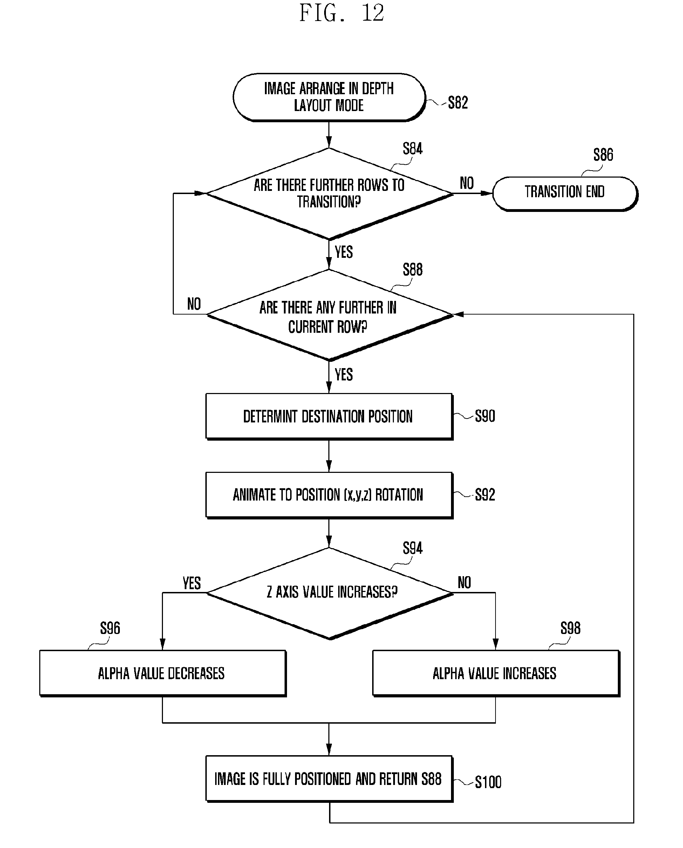

A transition from a depth layout mode to a spiral layout mode will now be described in connection with Figures 11 and 12. Initially images are displayed in the depth layout mode as illustrated in Figure 2 and as illustrated in the left hand side of Figure 11. In Figure 11 images are numbered to clarify the corresponding images in the depth layout mode and the spiral layout mode. Unlike the above described transition, images remain continuously visible and are animated as they are processed and slide to their new positions as indicated by arrows 80. It will be understood that Figure 11 is provided to clarify the relationship between the images in the depth layout mode and the spiral layout mode and the transition does not involve the two layout modes being offset or displayed adjacent to one another. Typically, both layout modes will be centred within the display screen. Images are repositioned sequentially by traversing the entire range of visible images. The images remain the same in both layouts, though additional images may added if there is space to display further images in the spiral mode, or vice versa.

The animated transition begins as shown in Figure 11 and as described below in the flowchart of Figure 12 with the bottom row in the depth layout mode. Each image transitions to its corresponding position in the spiral layout as shown with the bottom row of the depth layout mode taking up the top positions within the spiral, followed by the next row up and so on. Images are moved to adjacent positions within the spiral starting at the left hand end of each row and are positioned in a counterclockwise manner following the spiral. It will of course be appreciated that the order of adding images to the spiral and the rotation direction of the spiral may vary. As each image transitions to the spiral the image is processed to change its size, shape, alpha value, rotation and other properties depending on its place within the spiral layout mode.

Referring to Figure 12, this provides further detail of the depth to spiral transition. The process begins, at step S82, with the images arranged initially in the depth layout mode. The process is recursive for each row and, at step S84, a check is made if there are further rows to transition. If there are no further rows the transition ends with the images finally arranged in the spiral layout mode. Within each row the process is recursive, and if there is at least one further row then, at step S88, a check is made if there are any further images in the current row. If no, then the end of the current row has been reached and the process returns to step S84. If yes then, at step S90, the destination position of the next image is determined within the spiral. At step S92, an animation sequence is initiated in which the image is moved, resized and reshaped to reach its destination position within the spiral. In order to determine the alpha value of the image within the spiral it is necessary to determine the whether the image is towards the front or back of the spiral. At step S94, the Z axis value of the spiral position is determined. Furthermore, at step S94, the Z axis position of the image within the spiral is determined relative to the Z axis position of the image within the depth layout mode. If the Z axis value has increased (indicating that the image is further away from the front than in the depth layout mode) then at step S96 the alpha value is decreased accordingly to make the image more transparent. Otherwise, at step S98 the alpha value is increased. At step S100, the image is fully positioned and processed within the spiral and the process returns to S88 to determine if there are further images on the same row.

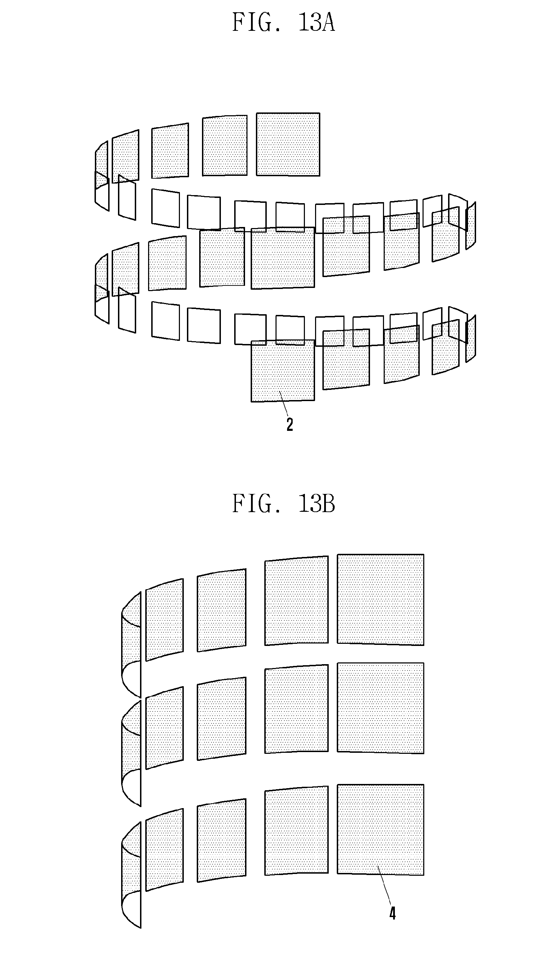

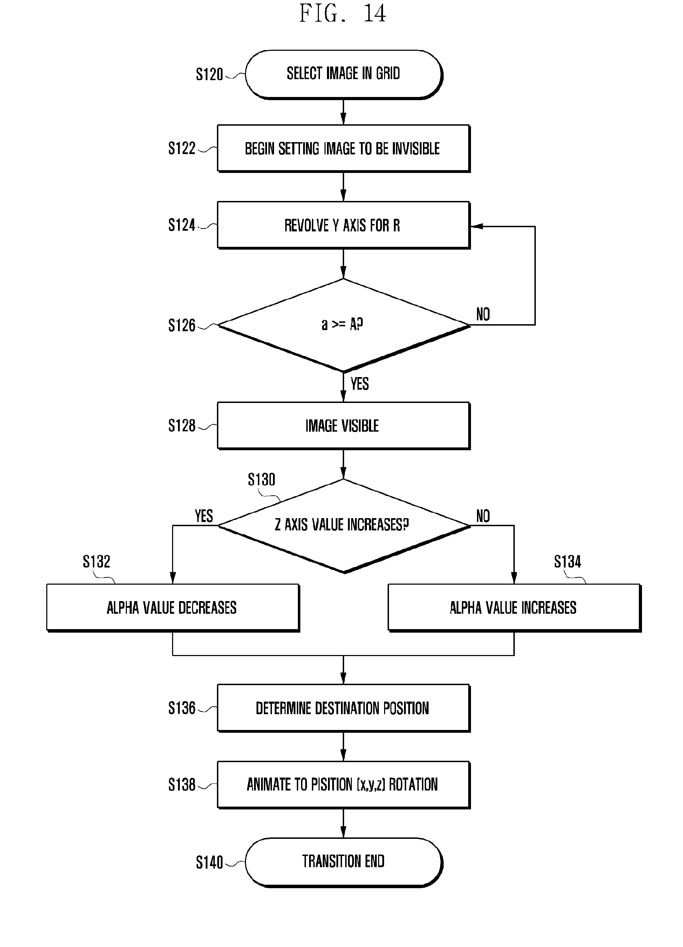

A transition from a spiral layout mode to a depth layout mode will now be described in connection with Figures 13a-13f and 14. The transition begins as shown in Figure 13a with the images arranged in the spiral layout mode. Transitioning the images to the grid layout mode involves two steps. The images displayed may or may not be the same in the two steps. In the first step the images in the spiral are deleted. Initially the images on the far side of the spiral are deleted, for instance by being faded such that their alpha values are reduced to zero. Images are the near side of the spiral are then shifted and resized such that they are aligned with one another, for instance by sliding turns of the spiral relative to one another until the images line up along the Y axis as shown in Figure 13b. While transitioning to this formation the images animate row by row, following the spiral, for instance starting at the top of the spiral and working downwards.

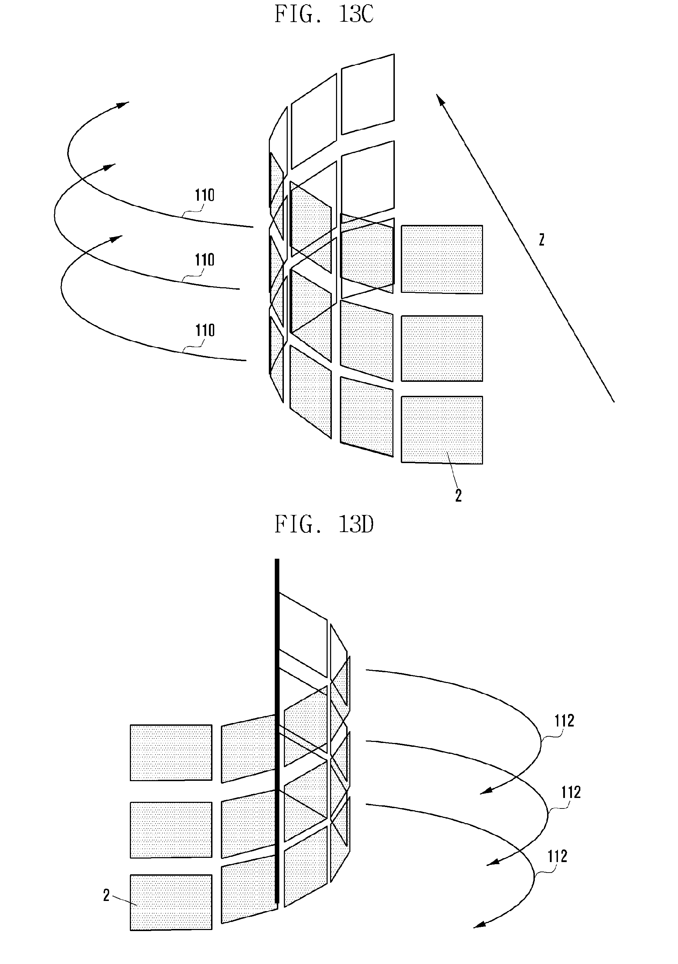

The next part of the first step is shown in Figure 13c and the animation is similar to the first part of the grid to depth transition. The aligned turns of the spiral are processed to give the appearance of the images being rotated about the surface of a cylinder and the images faded (by decreasing the alpha values for the images) until at the apparent furthest point of the rotation the images completely disappear. As shown in Figure 13c, the items in the grid begin a revolve effect, clockwise, around the Y axis. The images 2 follow a curved path defined by the curve of the spiral and indicated by curved arrows 110.The revolve effect takesthe images farther in the distance along the Z axis, making them and the images fade away, gradually, from being fully opaque to being invisible. The point of invisibility may be the furthest point of the rotation from the initial position. It will be appreciated that the sliding and rotation may be in the opposite directions, and the rate of fade and the point at which the images disappear may vary.

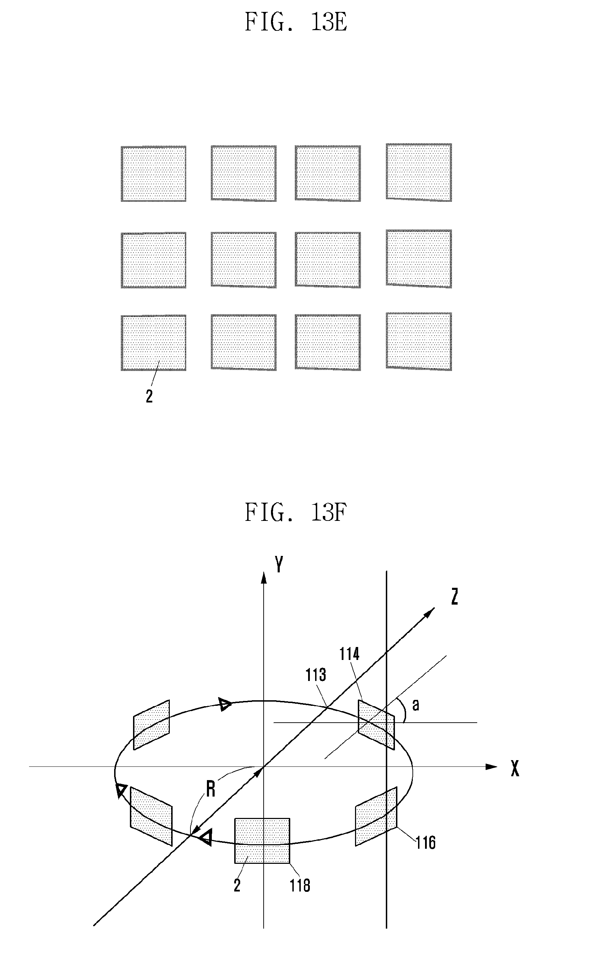

The second step of the transition to the grid layout mode is essentially the reverse of the first step of the transition from grid layout mode to depth layout mode. The apparent rotation continues starting at the point of invisibility from where images arranged in a grid begin to appear and are rotated about a curved surface as shown in Figure 13d along the path indicated by curved arrows 112 until the images reach the closest point in the curve from where they continue to move to the left until the whole grid is visible as shown in Figure 13e.

Referring to Figure 13f this schematically shows the rotation for a single image 2 from its initial position 113 at which it is fully transparent, revolving about the Y axis through illustrated positions 114, 116 and 118. Variables angle a, radius R and invisibility toggle value A are the same as discussed above in connection with Figures 8c and 9.

Figure 14 is a flow chart indicating how the alpha value is derived for each image in the grid. It will be appreciated that portions of the flowchart of Figure 14 are similar to portions of the flow chart of Figure 9. At step S120, a first image in the grid (which is currently rotated to the furthest point away from the viewpoint of the user is selected (the flowchart of Figure 14 is repeated for each image). At step S122, the image begins is set to be invisible (zero alpha). At step S124, the image begins to rotate about an axis parallel to the Y axis. At step S126, a check is made whether the angle a is greater than or equal to the toggle value A, and if so a new image appears at step S128. If not then rotation of the image continues at step S124. At step S130, the Z position value of the image is determined, which allows the determination of angle a. It may be that the X position must also be determined. If the Z value has increased this indicates that the image has moved further away from the display screen and so, at step S132, the image alpha value is decreased. Alternatively, if the Z value has increased this indicates that the image has moved closer to the display screen and so, at step S134, the image alpha value is increased. At step S136, the final position of the image in the grid is calculated and at step S138 the image is animated to its final position. It will be understood that the process of Figure 14 is performed repeatedly until the image assumes its final position in the grid, and is repeated for each image.

As noted above, zooming when in the spiral layout mode can vary. In a further embodiment of the invention illustrated in Figures 15a and 15b, zooming may affect only a single central image without affecting the number of revolutions visible or items visible on other spiral sections. Figure 15a shows the spiral layout view before any zooming. A single image 150 is centrally located within the screen at the front of the spiral and is available for zooming. In alternative embodiments one or more other images may be zoomed at the same time, or in place of image 150. It can be seen that the central image 150 is the same size as corresponding images 152, 154 at the front of the spiral on adjacent turns of the spiral. If the user provides a zoom input then the central image 150 is enlarged as shown in Figure 15b. To make space, adjacent images 156 on that section of the spiral (for instance through a spiral turn of 90° on either side of the central image 150) are processed to change their properties (scale, position, rotation) to make room for the increased size of the central image. The remainder of the images within the spiral are unaffected.

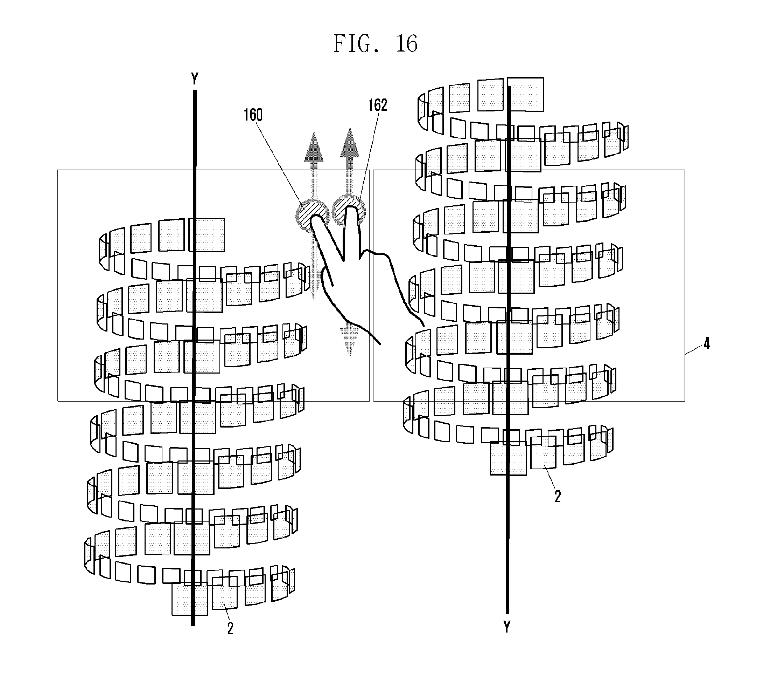

In order to improve navigation of the spiral layout mode, in particular where a spiral includes a very large number of images, it is desirable to allow a user to rapidly traverse the entire length of the spiral. This may be achieved by detecting a specific user input instructing movement of the spiral along the Y axis without rotation of the spiral as shown in Figure 16, which shows a single spiral at two different times (offset from one another for clarity) with the spiral on the right moved upwards within the screen 4 (only the portion of each spiral within the outline of screen 4 being visible. In a portable apparatus having a touch screen the input signalling entire spiral translation may comprise a multi-touch input on the screen, which moves upwards or downwards generally parallel to the Y axis. This may be a two finger motion along the Y axis for multiple touch points 160, 162 as illustrated. Each image within the spiral maintains its properties (position, rotation, scale etc.) relative to the spiral itself, but the entire spiral is translated along the Y axis as if it were a single component.

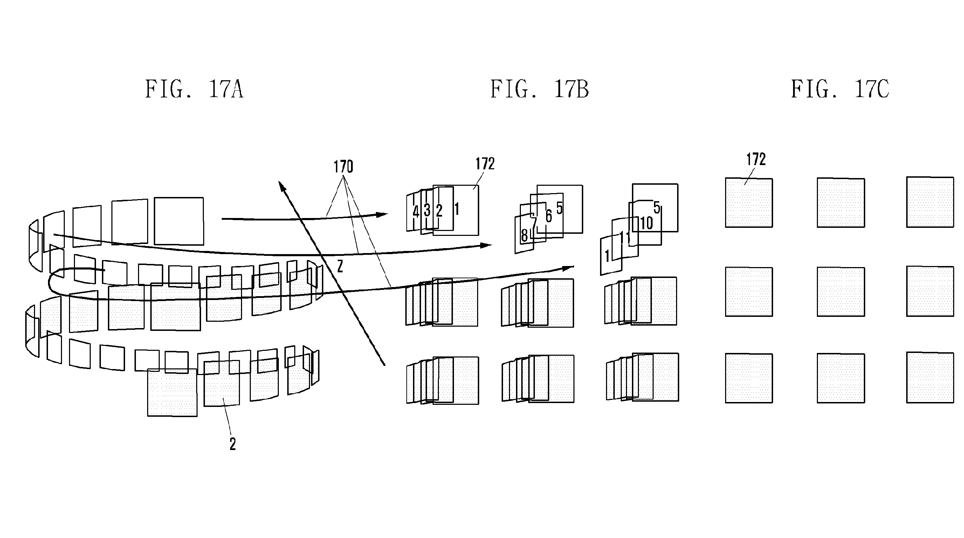

In a further modification, the grid layout mode may comprise a grid of container items containing multiple images grouped together and represented as a single unit. Consequently a larger number of images, groups of which are related to one another, for instance by image properties or other data stored with the images, can be displayed on the screen simultaneously. This allows more rapid navigation through a large number of images within the grid layout mode. Figures 17a, 17b and 17c illustrate a variation to the transition from spiral layout mode to grid layout mode to take account of the option to display at least one container within the grid layout mode. Such a transition from spiral to grid layout comprises groups of images from different continuous sections of the spiral becoming a single container in the grid layout as shown in Figures 17a and 17b. The images in the spiral layout of Figure 17a are numbered. The transition involves the numbered images being animated and moving to separate containers 172 (only one of which is identified) according to their numbering along lines 170. Figure 17b shows an intermediate view in which each container 172 is represented by a stack of images shown overlapped. Figure 17c shows the final layout in which the containers are represented by a single image each representative of the group, which may be one of (for instance the top one of) the images within each container. The groups of items forming a single container are consecutive images within the spiral and follow an animation pattern (one image at a time within the first group and then each group in turn) that by changing properties such as position (x, y, z), rotation and scale in a continuous motion, positions the images in a grid layout mode of containers 172 in a predetermined position. As the spiral images are re-organised into a grid formation, the spiral may perform an unwinding effect so that the group of images currently processed is the one closest to the user on the Z axis (e.g. items numbered as 1, 2, 3, and 4).

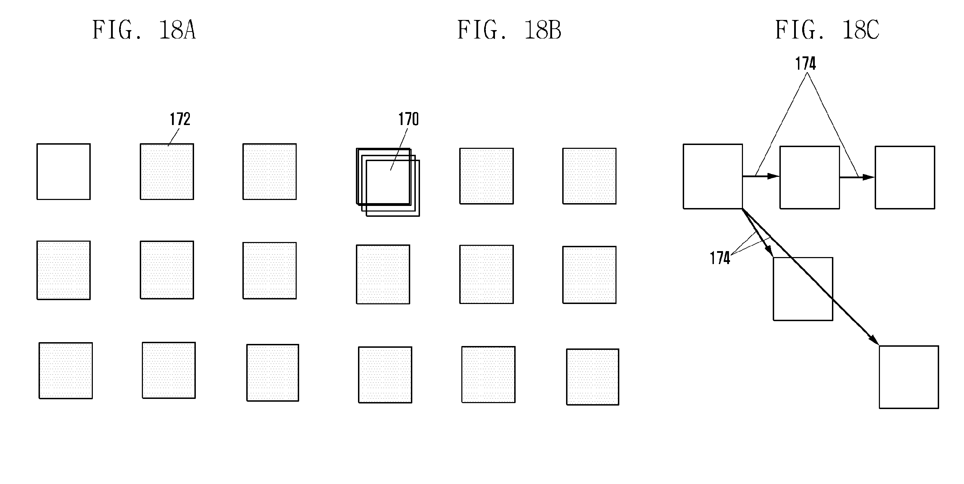

Figures 18a, 18b and 18c illustrate an operation of expanding the images within a single container in response to receiving a user input selecting a single container. The transition is from a first grid layout to a second grid layout and comprises images being unpacked from a single container to form a new grid. Figure 18a shows a grid layout mode showing at least one container 172, and optionally a mix of containers and images. In response to a user input selecting the top left container the remaining containers are faded as shown in Figure 18b and the images within that container begin to expand. Figure 18b shows the images in the remaining container beginning to be shown overlapped. Each image is there animated along lines 174 to its resulting position in the new grid as shown in Figure 18c by changing the properties of each image such as position, rotation, and scale until its final destination is reached. The process of fading the other containers (reducing the alpha value to zero) and repositioning images from the selected container may overlap. A reverse effect allows a group images displayed in a grid layout mode to be packed into a single container. The remaining spaced within the grid may be filled with further images or further containers, if available.

Particular embodiments of the invention described above relate to a gallery GUI for a portable apparatus having three different layout modes: grid, depth and spiral, and incorporating particular transitions between each mode. However, it will be appreciated that the present invention is not limited to this. In particular, in certain embodiments of the invention the gallery GUI may be implemented with only one or any two of the above described layout modes, optionally with further alternative gallery layout modes. Additionally, or alternatively, different or further transitions between each gallery layout mode may be provided. As one example, an embodiment of the invention may relate to only the spiral layout mode, and may optionally include some or all of the above described navigation and zooming techniques.

It will be appreciated that embodiments of the present invention can be realized in the form of hardware, software or a combination of hardware and software. Implemented in hardware, firmware or as any such software or computer code that may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A portable device comprising:
a display screen;
a processor; and
an input device;
wherein the processor controls the display screen for displaying a graphical user interface comprising a plurality of images arranged in a three dimensional (3D) space in a layout mode comprising one of:
a depth layout mode in which the plural images are displayed such that at least a first image is positioned further away in the 3D space than a second image, each image being positioned upon a two dimensional (2D) surface extending into the 3D space, transverse to the 2D surface at its respective position and facing the plane of the display screen; and
a curved layout mode in which the plural images are displayed along a curved path within the 3D space forming a coil about an axis which is parallel to or forms an acute angle relative to the plane of the display screen such that at least another image is positioned facing outwards from the coil and at least one image is positioned facing inwards towards the axis,
wherein the input device is configured to receive a selection input selecting one of the plural images displayed on the display screen for performing a corresponding function.

2. The portable device according to claim 1, wherein the processor controls the display screen for displaying the images arranged in a layout mode from a group including at least one of the depth layout mode, the curved layout mode, and a grid layout mode in which the images are displayed arranged in a grid having rows and columns upon a 2D surface within the 3D space.

3. The portable device according to claim 2, wherein in the grid layout mode, the images are arranged in a grid upon the 2D surface having rows and columns, the rows being arranged parallel to or forming an acute angle relative to the plane of the display screen.

4. The portable device according to claim 1, wherein in the curved layout mode, the curved path coils about its axis such that portions of each turn of the coil approach the plane of the display screen and portions of each turn of the coil pass further away from the plane of the display screen,
wherein in the curved layout mode, each image is positioned upon a surface of a cylinder having a radius equal to the radius of the coil at the position of the image and a longitudinal axis parallel to or forming an acute angle relative to the axis of the coil.

5. The portable device according to claim 1, wherein the processor is configured to adjust the transparency of at least one image in proportion to the distance of the image from the plane of the display screen in the 3D space.

6. The portable device according to claim 1, wherein the input device is configured to receive a navigation input indicating a required movement of the currently displayed layout mode and to supply the navigation input to the processor which upon receipt is configured to control the display screen to shift the currently displayed images such that at least one image is shifted to a position at which it is no longer visible within the display screen and at least one further image which was previously not visible becomes visible within the display screen.

7. The portable device according to claim 6, wherein when the grid layout mode is currently displayed, the navigation input causes sliding motion of the images within the plane of the 2D surface,
wherein the navigation input causes the processor to tilt at least one image in the direction of the sliding motion.
wherein when in the curved layout mode, the navigation input causes rotation of the coil about its axis such that for at least some of the images the distance from the image to the plane of the display screen in the 3D space changes,
wherein the navigation input further causes translation of the coil along its axis such that the coil screws upwards or downwards causing images to pass sequentially through at least one fixed position relative to the display screen.

8. The portable device according to claim 1, wherein the input device is arranged to receive a coil translation input when in the curved layout mode and to supply the coil translation input to the processor which upon receipt is arranged to control the display screen to translate the coil along its axis without rotation of the coil such that at least one image is shifted to a position at which it is no longer visible within the display screen and at least one further image which was previously not visible becomes visible within the display screen.

9. The portable device according to claim 1, wherein the input device receives a zoom input indicating a required zoom operation and supplies the zoom input to the processor, which upon receipt is arranged to cause at least one currently displayed image to be enlarged or shrunk.

10. The portable device according to claim 2, wherein the processor is configured to control the display screen to display the plurality of images arranged in at least two layout modes including at least one from a group including the grid layout mode, the depth layout mode, and the curved layout mode,
wherein the input device is configured to receive a layout mode change input instructing a change to the current layout mode and to supply the layout mode change input to the processor which upon receipt is arranged to change the currently displayed layout mode to an alternative layout mode by modifying at least one of the position, size, shape and transparency of displayed images and to animate the change the display of at least some of the images in the current layout mode and at least some of the images in the alternative layout mode.

11. The portable device according to claim 10, wherein the current layout mode is the grid layout mode and the alternative layout mode is the depth layout mode, and wherein the processor is configured to:
cause rotation of a currently displayed grid of images having rows and columns about a curved surface such that the images move further from the plane of the display screen and become increasingly transparent until disappearing; and
cause rows of images in the depth layout mode to appear within the display screen and to expand and translate to their final positions within the depth layout mode.

12. The portable device, according to claim 10, wherein the current layout mode is the depth layout mode and the alternative layout mode is the curved layout mode, and wherein the processor is configured to:
cause each image in turn displayed in the depth layout mode to slide and change form to adopt a new position and form within the coil,
wherein in the depth layout mode the images are arranged in rows and the images are caused to slide to their new positions within the coil such that the images are ordered within the coil according to the positions of the images within a grid in the depth layout mode, positions within the coil being allocated to images in the grid starting from a first end of a first row and then each image in the row in order until the row is complete, continuing with each row in turn.

13. The portable device according to claim 10, wherein, when the current layout mode is the curved layout mode and the alternative layout mode is the grid layout mode, the processor is configured to:
cause images positioned within each turn of the coil furthest from the plane of the display screen in the 3D space to become increasingly transparent until they disappear;
cause remaining portions of each turn of the coil to rotate about the longitudinal axis of the coil such that images move further from the plane of the display screen and become increasingly transparent until they disappear; and
cause rotation of a grid of images having rows and columns about a curved surface such that the images move towards the plane of the display screen, the images initially being transparent and becoming increasingly opaque until upon reaching the closest point of the curved surface the images continue to slide relative to the plane of the display screen to form a grid of images having rows and columns.

14. The portable device according to claim 2, wherein the grid layout mode displays images arranged in a grid having rows and columns and includes at least one container image representative of a group of images,
wherein the input device is configured to receive a container unpack input identifying a container image representative of a group of images to be displayed and to supply the container unpack input to the processor which upon receipt is arranged to:
cause other currently displayed images to becoming increasingly transparent until they disappear; and
cause at least some images within the group of images to slide to separate positions within the grid of images.

15. The portable device according to claim 10, wherein, when the current layout mode is the curved layout mode and the alternative layout mode is the grid layout mode, the processor is configured to:
cause each image in turn displayed in the curved layout mode to slide and change form to adopt a new position and form within a grid;
wherein the grid layout mode displays images arranged in a grid having rows and columns and includes at least one container image representative of a group of images, such that at least one group of images within the coil are caused to slide and change form to adopt the same position within the grid indicated by a container image.
